# EUROPEAN PATENT APPLICATION

(11) **EP 0 814 103 A2**
(43) Date of publication of application: **29.12.1997**
(21) Application number: 97109873.6
(22) Date of filing: 17.06.1997
(51) Int. Cl.: C08F 291/00, C08F 2/22, D06M 15/21, D21H 19/58, C14C 11/00, C09D 151/00, C09J 151/00

(54) **Process for the preparation of low viscosity aqueous polymer dispersion with a polymer volume concentration of at least 50%**

(30) Priority: 18.06.1996 DE 19624280
(71) Applicant: BASF AKTIENGESELLSCHAFT, 67056 Ludwigshafen (DE)
(72) Inventor: Keller, Peter, Dr., 69493 Hirschberg (DE); Schuler, Bernhard, Dr., 68199 Mannheim (DE); Stanger, Bernd, Dr., 67373 Dudenhofen (DE)
(74) Representative: Kinzebach, Werner, Dr.

(57) **Zusammenfassung**

Die Erfindung betrifft ein Verfahren zur Herstellung niedrigviskoser, wässriger Polymerisatdispersionen mit Polymervolumenkonzentrationen von wenigstens 50 Vol.-%, bezogen auf die Polymerdispersion, durch radikalische Emulsionspolymerisation ethylenisch ungesättigter Monomerer, ausgenommen Vinyl- und Vinylidenhalogenide, in Gegenwart wenigstens eines Initiators und wenigstens eines Ausgangspolymerisats, wobei das Verfahren dadurch gekennzeichnet ist, daß man die Hauptmenge der Monomere in einer wässrigen Dispersion des Ausgangspolymerisats emulgiert und diese Emulsion kontinuierlich der Polymerisationsreaktion zuführt.

## Description

Die vorliegende Erfindung betrifft ein Verfahren zur Herstellung niedrigviskoser, wässriger Polymerisatdispersionen mit Polymervolumenkonzentrationen von wenigstens 50 Vol.-%, bezogen auf die Polymerisatdispersion.

Wässrige Polymerisatdispersionen finden aufgrund ihrer Eigenschaft, beim Verdampfen des wässrigen Dispersionsmediums Polymerisatfilme zu bilden, in vielfacher Weise Verwendung, beispielsweise als Bindemittel für Anstrichfarben, als Beschichtungsmassen für Leder und Papier, Ausrüstungen für Gewebe oder als Klebefilme.

Hochkonzentrierte wässrige Polymerisatdispersionen sind von Vorteil, da der Aufwand für das Verdampfen des wässrigen Dispergiermediums bei der Filmbildung oder bei der Herstellung von Polymerpulvern reduziert und andererseits eine geringere Transport- und Lagerkapazität erforderlich ist.

Von Nachteil ist jedoch, daß mit zunehmendem Polymergehalt die Viskosität der Polymerisatdispersionen zunimmt. Dies führt zu Problemen bei der Herstellung (Abführung der Reaktionswärme) als auch bei der Verarbeitung. Weiterhin neigen solch hochkonzentrierte Polymerisatdispersionen zur Mikrokoagulation (Stippenbildung). Mikrokoagulate lassen sich aufgrund ihrer geringen Größe (< 40 µm) nur mit hohem Aufwand aus den Polymerisatdispersionen entfernen und führen insbesondere zu Störungen bei der Verfilmung der wässrigen Polymerisatdispersionen. In diesem Zusammenhang empfiehlt sich die Angabe des Polymergehaltes in Volumenteilen (Vol.-% = Gew.-% geteilt durch Dichte des Polymers), da die genannten Effekte auf die Packung der Polymerisatteilchen in der Polymerisatdispersion zurückzuführen sind.

Es hat sich gezeigt, daß Polymerisatdispersionen mit einer breiten Größenverteilung der dispergierten Polymerisatteilchen (polydisperse Polymerisate) bei gleichem Feststoffgehalt in der Regel eine geringere Viskosität aufweisen als solche mit einer engen Größenverteilung (monodispers).

Die DE-A 31 47 008 beschreibt ein Verfahren zur Herstellung hochkonzentrierter, wässriger Kunststoffdispersionen mit einer bimodalen Größenverteilung der Polymerisatteilchen durch Emulsionspolymerisation ethylenisch ungesättigter Monomerer in Gegenwart von zwei Ausgangspolymerisaten mit unterschiedlicher Teilchengröße. Auch wenn bei diesem Verfahren Polymerisatdispersionen mit Polymergehalten von bis zu 70 Gew.-% (≈ 64 Vol.-%) erhalten werden, erscheint doch die Verwendung zweier unterschiedlicher Ausgangspolymerisate aufwendig. Zudem weisen die in den Beispielen beschriebenen Dispersionen Viskositätswerte auf, die für viele praktische Anwendungen zu hoch sind.

Die US-A-4,130,523 betrifft ein Verfahren zur Herstellung wässriger Polymerisatdispersionen, bei dem während des Polymerisationsprozesses laufend bereits gebildete, wässrige Polymerisatdispersion aus der Reaktionszone entfernt, gelagert und später der Reaktionszone als eine Art Ausgangspolymerisat wieder zugeführt wird. Dieses Verfahren erscheint jedoch zu aufwendig, um eine großtechnische Realisierung zu erreichen.

Die US-A-3,424,706 beschreibt ein Verfahren zur Herstellung wässriger Polymerisatdispersionen, die 70 bis 97 Gew.-% Vinylidenchlorid einpolymerisiert enthalten, durch Emulsionspolymerisation in Gegenwart von einem Ausgangspolymerisat. Hierbei geht man so vor, daß die Hauptmenge des Ausgangspolymerisates als Latex und die Monomere dem Reaktionsgemisch zudosiert werden. Nachteilig an diesem Verfahren ist, daß es sich auf Monomergemische beschränkt, die hauptsächlich Vinylidenchlorid enthalten. Darüber hinaus werden lediglich Polymervolumenkonzentrationen kleiner 50 Vol.-% erhalten.

Die DE-A 42 13 965 beschreibt ein Verfahren zur Herstellung hochkonzentrierter wässriger Polymerisatdispersionen, wobei Monomere und Ausgangspolymerisat über getrennte Zuläufe dem Polymerisationsansatz kontinuierlich zugefügt werden. Bei diesem Verfahren ist das Problem der Bildung von Mikrokoagulaten (Stippen) nicht vollständig zufriedenstellend gelöst.

Der vorliegenden Erfindung liegt daher die Aufgabe zugrunde, ein Verfahren bereitzustellen, das es erlaubt, wässrige Polymerisatdispersionen mit hoher Polymervolumenkonzentration, niedriger Viskosität sowie einem reduzierten Gehalt an Mikrokoagulaten herzustellen. Außerdem soll das Verfahren weitgehend unabhängig von der Art der verwendeten Monomere sein.

Diese Aufgabe konnte überraschenderweise gelöst werden durch ein Verfahren zur Herstellung niedrigviskoser, wässriger Polymerisatdispersionen mit Polymervolumenkonzentrationen von wenigstens 50 Vol.-%, bezogen auf die Polymerisatdispersion, durch radikalische Emulsionspolymerisation ethylenisch ungesättigter Monomere, ausgenommen Vinyl- und Vinylidenhalogenide, in Gegenwart wenigstens eines Initiators und wenigstens eines Ausgangspolymerisats, wobei das Verfahren dadurch gekennzeichnet ist, daß man die Hauptmenge der Monomere in einer wässrigen Dispersion des Ausgangspolymerisats emulgiert und diese Emulsion kontinuierlich der Polymerisationsreaktion zuführt. Die Erfindung betrifft auch die durch das erfindungsgemäße Verfahren hergestellten Polymerisatdispersionen.

Erfindungsgemäß wird die Emulsionspolymerisation so durchgeführt, daß man die Hauptmenge, vorzugsweise wenigstens 80 Gew.-%, insbesondere wenigstens 90 Gew.-%, der zu polymerisierenden Monomere in einer wässrigen Dispersion des Ausgangspolymerisats (Saat-Latex), gegebenenfalls mit Hilfe grenzflächenaktiver Substanzen voremulgiert und diese Emulsion dem bei Reaktionstemperatur befindlichen Polymerisationsgefäß zudosiert. Hierbei beträgt die Menge an Ausgangspolymerisat, bezogen auf die zu polymerisierenden Monomere vorzugsweise 0,01 bis 10 Gew.-% und insbesondere 0,1 bis 2 Gew.-%. Das Verhältnis von Wasser:Monomer liegt im Bereich von 1:1 bis 1:9 (Gew.-Teile). Um dies zu erreichen, muß man gegebenenfalls weiteres Wasser und gegebenenfalls weitere grenzflächenaktive Substanzen zusetzen. In einer bevorzugten Ausführungsform lässt man das Ausgangspolymerisat vor Benutzung in der Monomeremulsion quellen, insbesondere wenigstens 30 min .

Die Reaktion wird vorzugsweise gestartet, indem man einen Teil der Monomere, gegebenenfalls zusammen mit einem Ausgangspolymerisat, zusammen mit Wasser und wenigstens einem Teil des Initiators im Reaktionsgefäß vorgelegt und auf Reaktionstemperatur erwärmt. Anschließend wird die Emulsion des Monomers im Saat-Latex kontinuierlich, d.h. mit konstanter Zulaufgeschwindigkeit oder nach der Gradientenfahrweise, der Polymerisationsreaktion zugeführt. Die Geschwindigkeit der Zugabe richtet sich nach dem Reaktionsumsatz und wird vorzugsweise so gewählt, daß wenigstens 80 Gew.-%, insbesondere 90 Gew.-%, und besonders bevorzugt 95 Gew.-% der im Reaktionsansatz befindlichen Monomere bereits einpolymerisiert sind.

In einer besonders bevorzugten Ausführungsform des erfindungsgemäßen Verfahrens wird der Zulauf der Monomeremulsion kontinuierlich oder stufenweise bis auf einen konstanten Wert gesteigert und anschließend dieser Wert, der durch Reaktionsumsatz (s. o.) oder andere verfahrensspezifische Parameter, wie Ansatzgröße, Reaktionswärme, Durchmischung etc. bestimmt sein kann, beibehalten wird.

In einer anderen bevorzugten Variante des erfindungsgemäßen Verfahrens wird die Reaktion gestartet, indem man einen Teil der Emulsion des Monomers im Saat-Latex zu der bei Reaktionstemperatur befindlichen, wenigstens einen Teil des Initiators enthaltenden Vorlage zudosiert. In allen Fällen kann die Vorlage Wasser, weiteren Emulgator und weiteres Ausgangspolymerisat enthalten, wobei insbesondere letzteres nicht zwingend identisch mit dem in der Monomeremulsion verwendeten Ausgangspolymerisat sein muß.

Die Art und Weise, wie der Initiator der Emulsionspolymerisation zudosiert wird, ist nicht kritisch. Der Initiator kann sowohl vollständig im Polymerisationsgefäß vorgelegt oder aber nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab, und kann vom Fachmann je nach Bedarf gewählt werden.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist ebenfalls möglich, so daß die Polymerisationstemperatur auch 100°C überschreiten und bis zu 130°C betragen kann. Vorzugsweise werden leicht flüchtige Monomere, wie Ethylen oder Butadien, unter erhöhtem Druck polymerisiert.

Mit Hilfe des erfindungsgemäßen Verfahrens lassen sich eine Vielzahl monoethylenisch ungesättigter Monomerer umsetzen. Hierzu zählen C₂-C₆-Olefine, z.B. Ethylen, Propylen, n-Buten, Isobuten, vinylaromatische Monomere, wie Styrol, α-Methylstyrol, o-Chlorstyrol oder Vinyltoluole, C₁-C₁₂-Alkylvinylether, wie Methyl-, Ethyl-, n-Propyl-, i-Propyl-, n-Butyl-, i-Butyl, 2-Ethylhexylvinylether, Vinylester von C₁-C₁₈-Monocarbonsäuren, wie Vinylacetat, Vinylpropionat, Vinylbutyrat, Vinylvalerat, Vinylhexanoat, Vinyl-2-ethylhexanoat, Vinyldecanoat, Vinyllaurat und Vinylstearat. Weiterhin kommen Ester α,β-ethylenisch ungesättigter C₃-C₁₀-Mono- oder Dicarbonsäuren mit C₁-C₁₂-, vorzugsweise C₁-C₈- und insbesondere C₁-C₄-Alkanolen in Frage. Auch können Ester dieser Säuren mit C₅-C₈-Cycloalkanolen verwendet werden. Geeignete C₁-C₁₂-Alkanole sind beispielsweise Methanol, Ethanol, n-Propanol, iso-Propanol, 1-Butanol, 2-Butanol, iso-, tert.-Butanol, n-Hexanol und 2-Ethylhexanol. Geeignete Cycloalkanole sind beispielsweise Cyclopentanol und Cyclohexanol. Geeignet sind insbesondere Ester der Acrylsäure, der Methacrylsäure, der Crotonsäure, der Maleinsäure, der Fumarsäure und der Itaconsäure. Speziell handelt es sich um (Meth)acrylsäuremethylester, (Meth)acrylsäureethylester, (Meth)acrylsäure-n-butylester, (Meth)acrylsäure-iso-butylester und (Meth)acrylsäure-2-ethylhexylester, Maleinsäuredimethylester oder Maleinsäuredi-n-butylester. Weiterhin kommen Nitrile α,β-monoethylenisch ungesättigter Carbonsäuren, wie Acrylnitril oder Methacrylnitril in Betracht. Darüber hinaus können auch C₄-C₈-konjugierte Diene, wie 1,3-Butadien und Isopren eingesetzt werden. Die genannten Monomere bilden üblicherweise den Hauptanteil und machen vorzugsweise 80 bis 99,9 %, insbesondere 90 bis 99,9 Gew.-% und speziell 95 bis 99,7 Gew.-% der zu polymerisierenden Monomere aus.

Als modifizierende Monomere werden vorzugsweise 0,1 bis 20 Gew.-%, inbesondere 0,1 bis 10 Gew.-% und speziell 0,3 bis 5 Gew.-% Monomere mit einpolymerisiert, deren Homopolymerisate eine erhöhte Wasserlöslichkeit aufweisen. Hierbei handelt es sich beispielsweise um α,β-monoethylenisch ungesättigte Mono- und Dicarbonsäuren mit 3 bis 10 C-Atomen und deren Amide oder um ethylenisch ungesättigte Alkyl- oder Arylsulfonsäuren. Hierzu zählen Acrylsäure, Methacrylsäure, Crotonsäure, Maleinsäure, Fumarsäure, Itaconsäure, Acrylamid und Methacrylamid, ferner Vinylsulfonsäure, (Meth)acrylamido-2-methylpropansulfonsäure und deren wasserlösliche Salze.

Weiterhin können Monomere einpolymerisiert werden, die die Festigkeit der aus der Polymeremulsion hergestellten Polymerisatfilme erhöhen. Diese werden in untergeordneter Menge, in der Regel bis zu 10 Gew.-%, vorzugsweise bis 5 Gew.-% und insbesondere bis 1 Gew.-%, bezogen auf die Gesamtmenge der zu polymerisierenden Monomere, mit einpolymerisiert. Hierbei handelt es sich um Monomere, die wenigstens eine Epoxy-, Hydroxy-, N-Alkylol- oder eine Carbonylgruppe enthalten. Beispiele hierfür sind die N-Hydroxyalkyl- und N-Alkylolamide der α,β-monoethylenisch ungesättigten Carbonsäuren mit 3 bis 10 C-Atomen wie 2-Hydroxyethyl (meth)acrylamid und N-Methylol(meth)acrylamid, die Hydroxoxalkylester besagter ethylenisch ungesättigter Carbonsäuren, z.B. Hydroxyethyl-, Hydroxypropyl- und Hydroxybutyl (meth)acrylat, ferner die ethylenisch ungesättigte Glycicylether und -ester, z.B. Vinyl-, Allyl- und Methallylglycicylether, Glycicylacrylat und -methacrylat, die Diacetonylamide der obengenannten ethylenisch ungesättigten Carbonsäuren, z.B. Diacetonyl(meth)acrylamid, und die Ester der Acetylessigsäure mit den obengenannten Hydroxyalkylestern ethylenisch ungesättigter Carbonäuren, z.B. Acetylacetoxyethyl(meth)acrylat. Weiterhin können Verbindungen eingesetzt werden, die zwei nicht-konjugierte, ethylenisch ungesättigte Bindungen aufweisen, z.B. die Diester zweiwertiger Alkohole mit α,β-monoethylenisch ungesättigten C₃-C₁₀-Monocarbonsäuren. Beispiele für derartige Verbindungen sind Alkylenglykoldiacrylate- und -dimethacrylate, wie Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat.

Das Molekulargewicht der Polymerisate kann durch Zugabe geringer Mengen, in der Regel 0,01 bis 5 Gew.-%, bezogen auf die zu polymerisierenden Monomere, einer oder mehrerer, das Molekulargewicht regelnder Substanzen eingestellt werden. Hierbei handelt es sich beispielsweise um Mercaptoverbindungen, wie Mercaptoethanol, Mercaptopropanol, Mercaptobutanol, Mercaptoessigsäure, Mercaptopropionsäure, Butylmercaptan, tert.-Dodecylmercaptan sowie Mercaptopropyltrimethoxysilan. Vorzugsweise werden derartige Substanzen im Gemisch mit den zu polymerisierenden Monomeren der Polymerisationsreaktion zugegeben.

Grenzflächenaktive Substanzen, die sich sowohl für die Durchführung der Emulsionspolymerisation als auch für die Herstellung der Monomeremulsion eignen, sind die üblicherweise für diese Zwecke eingesetzten Schutzkolloide und Emulgatoren. Die grenzflächenaktiven Substanzen werden üblicherweise in Mengen bis zu 10 Gew.-%, vorzugsweise 0,5 bis 5 Gew.-% und insbesondere 0,5 bis 3 Gew.-%, bezogen auf die zu polymerisierenden Monomere, eingesetzt.

Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer, kationischer als auch nicht-ionischer Natur sein. Bei der Verwendung von Gemischen grenzflächenaktiver Substanzen müssen die Einzelkomponenten miteinander verträglich sein, was im Zweifelsfall anhand weniger Vorversuche überprüft werden kann. Gebräuchliche Emulgatoren sind z.B. ethoxylierte Mono-, Di- und Trialkylphenole (EO-Grad: 3 bis 50, Alkylrest: C₄-C₉), ethoxylierte Fettalkohole (EO-Grad: 3 bis 50, Alkylrest: C₈-C₃₆) sowie Alkali- und Ammoniumsalze von Alkylsulfaten (Alkylrest: C₈-C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192-208).

Weitere geeignete anionische Emulgatoren sind Bis(phenylsulfonsäure)ether bzw. deren Alkali- oder Ammoniumsalze, die an einem oder beiden aromatischen Ringen eine C₄-C₂₄-Alkylgruppe tragen. Diese Verbindungen sind allgemein bekannt, z.B. aus der US-A 4,269,749, und im Handel erhältlich, beispielsweise als Dowfax® 2A1 (Warenzeichen der Dow Chemical Company).

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z.B. Alkalimetallperoxodisulfate als auch um Azoverbindungen handeln. Es werden auch kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxyethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Vorzugsweise beträgt die Menge der eingesetzten radikalischen Initiatorsysteme, bezogen auf die Gesamtmenge der zu polymerisierenden Monomeren, 0,1 bis 2 Gew.-%.

Im erfindungsgemäßen Verfahren werden die Ausgangspolymerisate als Dispersionen eingesetzt. Als konstituierende Monomere für die Ausgangspolymerisate eignen sich die für die radikalisch wässrige Emulsionspolymerisation empfohlenen Monomere in den dort angegebenen Mengen (s.o.).

Bevorzugt enthalten die Ausgangspolymerisate als Monomere 90 bis 99,9 Gew.-%, insbesondere 95 bis 99,7 Gew.-% vinylaromatische Monomere, konjugierte C₄-C₈-Diene, Ester der Acrylsäure bzw. der Methacrylsäure mit C₁-C₁₂-Alkanolen oder C₅-C₈-Cycloalkanolen oder deren Mischungen, und
0,1 bis 10 Gew.-%, insbesondere 0,3 bis 5 Gew.-%, α,β-ungesättigte C₃-C₁₀-Mono- oder Dicarbonsäuren, deren Amide, N-Vinyllactame und/oder deren Mischungen einpolymerisiert.

In einer speziellen Ausführungsform werden als Ausgangspolymerisate Copolymerisate verwendet, die 90 bis 99,9 Gew.-%, insbesondere 95 bis 99,7 Gew.-% Styrol, α-Methylstyrol, Ester der Acrylsäure bzw. Methacrylsäure mit C₁-C₁₂-Alkanolen, Butadien oder deren Mischungen, und 0,1 bis 10 Gew.-%, insbesondere 0,3 bis 5 Gew.-% (Meth)acrylsäure, (Meth)acrylnitril, (Meth)acrylamid oder deren Mischungen einpolymerisiert enthalten.

Die mittlere Teilchengröße (d₅₀-Wert, s.u.) der erfindungsgemäß zuzusetzenden Ausgangspolymerisate beträgt weniger als 250 nm und liegt vorzugsweise im Bereich von 10 bis 200 nm, insbesondere 10 bis 100 nm und besonders bevorzugt 10 bis 50 nm. Der Feststoffgehalt solcher Dispersionen liegt üblicherweise im Bereich von 20 bis 50 Gew.-%.

Es hat sich als vorteilhaft erwiesen, wenn das als Saat-Latex verwendete Polymerisat eine enge Teilchengrößeverteilung aufweist, d.h. der Quotient$\text{Q =} \frac{{\text{d}}_{\text{90}} {\text{- d}}_{\text{10}}}{{\text{d}}_{\text{50}}}$ < 1, bevorzugt < 0,75 und besonders bevorzugt < 0,5 ist. Hierbei wird der d₅₀-Wert als das Gewichtsmittel der Teilchengröße definiert, wie sie mittels einer analytischen Ultrazentrifuge entsprechend den Methoden von W. Scholtan und H. Langen, Kolloid-Z. und Z.-Polymere 250 (1972) 782-796 (s.u.), bestimmt werden. Die Ultrazentrifugenmessung liefert die integrale Massenverteilung des Teilchendurchmessers einer Probe, aus der sich entnehmen lässt, wieviel Gewichtsprozent der Teilchen einen Durchmesser gleich oder unterhalb einer bestimmten Größe aufweisen. Der d₅₀-Wert steht dabei für die Teilchengröße, die von 50% der Teilchen unterschritten wird, selbiges gilbt für den d₉₀- und den d₁₀-Wert.

Entsprechende Ausgangpolymerisat-Dispersionen sind in bekannter Weise erhältlich, beispielsweise nach Houben-Weyl, Methoden der Organischen Chemie, Band E20, Teil I, Makromolekulare Stoffe, Georg-Thieme-Verlag, Stuttgart, 1987, S. 248-268 (hinsichtlich weiterer Details wird auf die DE-A 42 13 965 Bezug genommen). Ihre Herstellung erfolgt beispielsweise dadurch, daß man die wässrige Phase, die eine basische Verbindung wie NaHCO₃ oder Ammoniak zur pH-Regulierung enthalten kann, die Monomere, die radikalischen Initiatoren, üblicherweise 0,1 bis 5 Gew.-%, bezogen auf die Menge der zu polymerisierenden Ausgangsmonomere, und 10 bis 50 Gew.-%, bezogen auf die zu polymerisierenden Monomere, grenzflächenaktive Substanzen bei niedriger Temperatur miteinander vermischt und anschliessend auf Polymerisationstemperatur erwärmt und polymerisiert. Mit zunehmender Menge an grenzflächenaktiver Substanz nimmt die Teilchengröße in der Regel ab.

Hierbei gilt für die Emulgatoren, die Polymerisationsinitiatoren und die das Molekulargewicht regelnden Verbindungen das für die Bmulsionspolymerisation bereits Gesagte (siehe oben). Die Monomer-, Regler- und Initiatorzusammensetzung für die wässrige Dispersion des Ausgangspolymerisates muß jedoch nicht zwingend identisch sein mit der für die Herstellung des Endpolymerisats verwendeten Zusammensetzung.

Im erfindungsgemäßen Verfahren schließt sich zur Verminderung des Restmonomergehaltes der Dispersion an die eigentliche Polymerisationsreaktion in der Regel aber nicht zwingend eine physikalische und/oder chemische Desodorierung an. Aus der EP-A 584 458 ist beispielsweise bekannt, den Restmonomergehalt wässriger Polymerisatdispersionen durch Abstreifen mittels Wasserdampf zu verringern, die EP-A 327 006 empfiehlt die Anwendung konventioneller Destillationsverfahren (physikalische Desodorierung). Die chemische Desodorierung erfolgt vorzugsweise durch eine sich an die Hauptpolymerisation anschließende Nachpolymerisation. Derartige Verfahren sind beispielsweise in der DE-A 38 34 734, der EP-A 379 892, der EP-A 327 006, der DE-A 44 19 518, DE-A 44 35 422 sowie der DE-A 44 35 423 beschrieben. Auf die Offenbarung dieser Schriften wird hiermit Bezug genommen.

Das erfindungsgemäße Polymerisationsverfahren eignet sich zur Herstellung von Polymerisatenddispersionen mit Polymervolumengehalten von wenigstens 50 Vol.-%, vorzugsweise von wenigstens 65 Vol.%. Ihre Viskosität beträgt im allgemeinen weniger als 1000 mPa·s, vorzugsweise weniger als 750 mPa·s und insbesonder weniger als 500 mPa·s (bestimmt nach DIN 53019 bei 23 °C. Das Verfahren läßt sich mit zufriedenstellender Reproduzierbarkeit zur Herstellung von Polymerisatdispersionen mit Feststoffvolumenkonzentrationen von bis zu 75 Vol.-% in großtechnisch einfach realisierbarer Weise anwenden. Die erhaltenen Dispersionen weisen auch dann nur eine geringe Viskosität und keine Neigung zur Bildung von Mikrokoagulaten auf.

Das erfindungsgemäße Verfahren eignet sich vorzugsweise zur Herstellung von Polymerisatdispersionen, die als Hauptbestandteil wenigstens einen der obengenannten Ester der Acrylsäure oder der Methacrylsäure mit C₁-C₁₂-Alkanolen, Styrol oder Butadien einpolymerisiert enthalten. Besonders bevorzugt sind Polymerisate, die 70 bis 100 Gew.-% Ester der Acryl- und/oder der Methacrylsäure mit C₁-C₁₂-Alkanolen, Styrol oder deren Mischungen, oder 70 bis 100 Gew.-% Styrol, Butadien oder deren Mischungen einpolymerisiert enthalten.

Besonders bevorzugt eignet sich das Verfahren zur Herstellung von Polymerisatdispersionen, in denen die Polymerteilchen
- 95 bis 99,7 Gew.-%: wenigstens eines Esters der Acryl- und/oder der Methacrylsäure mit C₁-C₁₂-Alkanolen und
- 0,3 bis 5 Gew.-%: Acrylsäure, Methacrylsäure und/oder Crotonsäure und
- 0 bis 1 Gew.-%: Acrylamid, Methacrylamid und/oder Crotonsäureamid
einpolymerisiert enthalten.

Die erfindungsgemäß erhältlichen Polymerisatenddispersionen eignen sich insbesondere als Bindemittel, z.B. für streichfähige Farben oder dünne Klebefilme, zur Ausrüstung von Papier, Leder, Geweben oder Vliesstoffen, oder als Massen zur Herstellung von Beschichtungen und Verklebungen, wobei solche Massen in an sich bekannter Weise zusätzliche Stoffe, wie Hilfsmittel für die Filmbildung, Füllstoffe oder Weichmacher enthalten können.

### BEISPIELE

### 1. Bestimmung der Teilchengröße und Teilchenzahl der Polymerisatteilchen in der Polymerisatdispersion sowie der Viskosität und der Stippennote

Die Teilchengrößenverteilung der Polymerisatteilchen wurde mit der sogenannten Coupling-PSD-Technik in der analytischen Ultrazentrifuge bestimmt (siehe W. Mächtle, Angewandte Makromolekulare Chemie, 162 (1988) 35-42 (Nr. 2735)).

Die Konzentration der Polymerisateilchen in der Polymerisatdispersion wurde ebenfalls mittels einer analytischen Ultrazentrifuge über den mittleren Teilchendurchmesser nach W. Mächtle, Makromolekulare Chemie 185, (1984) 1025-1039 bestimmt (siehe auch DE 42 13 965.1).

Die Viskosität der erhaltenen Polymerisatdispersionen wurde dynamisch bei 23°C und einem Geschwindigkeitsgefälle von 487 s⁻¹ gemäß DIN 53019 bestimmt.

Die Stippennote beschreibt den Anteil an Mikrokoagulaten in der Polymerdispersion. Hierzu wird eine definierte Menge der Polymerdispersion auf eine durchsichtige Probefläche in einer Schichtdicke von 60 µm aufgetragen und nach der Trocknung mit entsprechenden Referenzproben visuell verglichen.
- Stippennote 1: keine sichtbaren Stippen
- Stippennote 2: einzelne Stippen
- Stippennote 3: einige Stippen
- Stippennote 4: viele Stippen
- Stippennote 5: sehr viele Stippen

### 2. Herstellung wässriger Dispersionen DA1 und DA2 eines Ausgangspolymerisates

DA1:In ein Gemisch aus
   - 65,4 kg: Wasser,
   - 25 kg: n-Butylacrylat, und
   - 22,25 kg: einer 45 gew.-% wässrigen Lösung der Dowfax® 2A1 entsprechenden, grenzflächenaktiven Substanz
wurde bei Raumtemperatur zunächst eine Lösung von 0,0625 kg Ascorbinsäure und 0,005 kg Eisen(II)-sulfat in 2 kg Wasser eingerührt und anschliessend innerhalb von 3 Minuten ein Gemisch aus 2 kg Wasser und 0,65 kg einer 30 gew.-%igen wässrigen Wasserstoffperoxidlösung zugegeben. Anschliessend wurde abgekühlt und nach Zugabe einer Mischung von 0,05 kg Ascorbinsäure in 1 kg Wasser noch 2 Stunden nachgerührt.

Die so erhältliche wässrige Dispersion eines Ausgangspolymerisats wies einen Feststoffgehalt von 30,2 Gew.-%, einen gewichtsmittleren Teilchendurchmesser $\overline{\text{d}}$_{w} von 32 nm und eine Teilchenkonzentration von 1,7·10¹⁹ Teilchen/kg auf.
DA2: Ein Gemisch aus
   - 1800 g: Wasser,
   - 225 g: einer 45 gew.-%igen wässrigen Lösung der Dowfax® 2A1 entsprechenden, grenzflächenaktiven Substanz,
   - 10 g: einer 25 gew.-% wässrigen Ammoniaklösung
   - 495 g: n-Butylacrylat, und
   - 5 g: Acrylsäure
wurde auf 80°C erhitzt und auf einmal mit 25 g Natriumperoxodisulfat versetzt. Anschliessend wurde die Temperatur 1 Stunde bei 80°C gehalten und dann auf 25°C abgekühlt.

Die so erhältliche wässrige Dispersion eines Ausgangspolymerisats wies einen Feststoffgehalt von 26 Gew.-%, einen gewichtsmittleren Teilchendurchmesser $\overline{\text{d}}$_{w} von 35 nm und eine Teilchenkonzentration von 1,1·10¹⁹ Teilchen/kg auf.

### 3. Herstellung verschiedener erfindungsgemäßer, wässriger Polymerisatenddispersion DE1 bis DE4

DE1: Ein in ein Polymerisationsgefäß vorgelegtes Gemisch aus
   - 150 g: Wasser,
   - 22 g: einer 20 gew.-% wässrigen Lösung der Dowfax® 2A1 entsprechenden, grenzflächenaktiven Substanz,
   und
   - 11 g: wässrige Dispersion DA1 aus 1)
   wurde unter Rühren auf 85°C erhitzt. Anschliessend wurde innerhalb von 5 Stunden unter Aufrechterhaltung der 85°C der Zulauf II kontinuierlich zugeführt. Zeitgleich mit Zulauf II erfolgte die kontinuerliche Zugabe des Zulaufs I, die sich zeitlich wie folgt gestaltete:
   - 4 Gew.-%: innerhalb von 40 min,
   dann
   - 8 Gew.-%: innerhalb von 40 min,
   dann
   - 88 Gew.-%: innerhalb von 200 min.

   Nach Beendigung der Zugabe von Zulauf II wurde das Reaktionsgemisch noch eine weitere Stunde bei 85°C gehalten.
   Zulauf I:
      - 549 g: wässrige Dispersion DA1
      - 1345 g: n-Butylacrylat
      - 889 g: Methylmethacrylat
      - 46,5 g: Methacrylsäure
   Zulauf II:
      - 160 g: Wasser
      - 10 g: Natriumperoxodisulfat

   Es wurde eine an Mikrokoagulat freie Dispersion mit einer Feststoffvolumenkonzentration von 67,8 Vol.-% erhalten, deren Viskosität bei 440 mPa.s lag. Die Stippennote betrug 1.
DE2: In ein Polymerisationsgefäß wurde ein Gemisch aus
   - 160 g: Wasser
   - 11,2 g: einer 20 gew.-%igen wässrigen Lösung der Dowfax® 2A1 entsprechenden grenzflächenaktiven Substanz, und
   - 11 g: wässrige Dispersion DA1 aus 1)
   vorgelegt und unter Rühren auf 85°C erhitzt. Anschliessend wurde innerhalb von 5 Stunden unter Aufrechterhaltung der Temperatur Zulauf II kontinuierlich zugeführt. Zeitgleich mit Zulauf II erfolgte die kontinuierliche Zugabe des Zulaufs I, die sich zeitlich wie folgt gestaltete:
   - 4 Gew.-%: innerhalb von 40 min,
   - 8 Gew.-%: innerhalb von 40 min,
   - 88 Gew.-%: innerhalb von 200 min.

   Nach Beendigung der Zugabe des Zulaufs 11 wurde das Reaktionsgemisch noch eine weitere Stunde bei 85°C gehalten.
   Zulauf I:
      - 549 g: wässrige Dispersion DA1 aus 1),
      - 1915,2 g: n-Butylacrylat,
      - 114 g: Ethylacrylat,
      - 114 g: 2-Ethylhexylacrylat,
      - 114 g: Methylmethacrylat,
      - 22,8 g: Acrylsäure,
      - 3,4 g: tert.-Dodecylmercaptan.
   Zulauf II:
      - 160 g: Wasser,
      - 10 g: Natriumperoxodisulfat,

   Es wurde eine an Mikrokoagulat freie Dispersion mit einer Feststoffvolumenkonzentration von 69.0 Vol.-% erhalten, deren Viskosität bei 360 mPa.s lag. Die Stippennote betrug 1.
DE3: In ein Polymerisationsgefäß wurden 175 g Wasser vorgelegt und auf 85°C erhitzt. Anschliessend wurde unter Aufrechterhaltung der Temperatur gleichzeitig beginnend nachfolgende Zuläufe I und II zugegeben, deren Zugabe sich zeitlich wie folgt gestaltete:
   Zulauf I:
      - 667 g: wässrige Dispersion DA2 aus 1),
      - 2257,2 g: n-Butylacrylat,
      - 22,8 g: Acrylsäure.
      - 2 Gew.-%: in 20 min,
      - 4 Gew.-%: in 20 min,
      - 8 Gew.-%: in 20 min,
      - 86 Gew.-%: in 180 min.
   Zulauf II:
      - 79,7 g: Wasser,
      - 6,0 g: Natriumperoxodisulfat.
      - 20 Gew.-%: in 5 min,
      - 80 Gew.-%: in 115 min.

   Nach Beendigung von Zulauf II wurde das Reaktionsgemisch noch eine weitere Stunde bei 85°C gehalten und anschliessend abgekühlt.
   Es wurde eine an Mikrokoagulat nahezu freie Dispersion mit einer Feststoffvolumenkonzentration von 70,0 Vol.-% erhalten, deren Viskosität 450 mPa.s betrug. Die Stippennote lag bei 1 bis 2.
DE4: Wie DE3, die Zuläufe gestalten sich zeitlich jedoch wie folgt:
   Zulauf I:
      - 1 Gew.-%: in 20 min,
      - 2 Gew.-%: in 20 min,
      - 4 Gew.-%: in 20 min,
      - 93 Gew.-%: in 300 min.
   Zulauf II:
      - 5 Gew.-%: in 60 min,
      - 5 Gew.-%: in 60 min,
      - 90 Gew.-%: in 240 min.

   Es wurde eine an Mikrokoagulat weitgehend freie Dispersion mit einer Feststoffvolumenkonzentration von 70,0 Vol.-% erhalten, deren Viskosität 500 mPa.s betrug. Die Stippennote lag bei 2.

### Herstellung der Vergleichsdispersionen VDE1 bis VDE4

VDE1 Es wurde wie bei DE1 verfahren, jedoch gab man die Saatdispersion DA1 und die Monomere über getrennte Zuläufe zu. Der Zulauf der Saat wurde 80 min nach Beginn der Monomerzugabe (Zulauf I aus DE1 ohne Saat) gestartet und gestaltete sich wie folgt:
   - 33,4 Gew.-%: innerhalb von 40 min,
   - 66,6 Gew.-%: innerhalb von 120 min.
   - Feststoffvolumenkonzentration:: 67,6 Vol.-%
   - Viskosität:: 460 mPa.s
   - Stippennote:: 4 bis 5
VDE2 Es wurde wie bei DE2 verfahren, jedoch gab man die Saatdispersion und die Monomere über getrennte Zuläufe zu. Der Zulauf der Saat wurde 80 min nach Beginn der Monomerzugabe (Zulauf I aus DE2 ohne Saat) gestartet. Der Zulauf der Saat gestaltete sich wie folgt:
   - 26 Gew.-%: innerhalb 80 min,
   - 54 Gew.-%: innerhalb 60 min,
   - 20 Gew.-%: innerhalb 60 min.
   - Feststoffvolumenkonzentration:: 69,4 Vol.-%
   - Viskosität:: 375 mPa.s
   - Stippennote:: 4
VDE3 Es wurde wie bei DE3 verfahren, jedoch wurde die Saatdispersion DA2 über einen getrennten Zulauf, zeitgleich beginnend mit der Monomerzugabe (Zulauf I aus DE3 ohne Saat), der Polymerisationsreaktion zugeführt. Die Zufuhr der Saat gestaltete sich wie folgt:
   - 5 Gew.-%: in 60 min,
   - 10 Gew.-%: in 60 min,
   - 85 Gew.-%: in 120 min
   - Feststoffvolumenkonzentration:: 69,5 Vol.-%
   - Viskosität:: 430 mPa.s
   - Stippennote:: 3 bis 4
VDE4 Es wurde wie in VDE 3 verfahren. Die Zugabe der Saatdispersion gestaltete sich wie folgt:
   - 1 Gew.-%: in 5 min,
   - 99 Gew.-%: in 295 min
   - Feststoffvolumenkonzentration:: 70,3 Vol.-%
   - Viskosität:: 510 mPa.s
   - Stippennote:: 4

## Patentansprüche

1. Verfahren zur Herstellung niedrigviskoser, wässriger Polymerisatdispersionen mit Polymervolumenkonzentrationen von wenigstens 50 Vol.-%, bezogen auf die Polymerdispersion, durch radikalische Emulsionspolymerisation ethylenisch ungesättigter Monomere, ausgenommen Vinyl- und Vinylidenhalogenide, in Gegenwart wenigstens eines Initiators und wenigstens eines Ausgangspolymerisats, dadurch gekennzeichnet, daß man die Hauptmenge der Monomere in einer wässrigen Dispersion des Ausgangspolymerisats emulgiert und diese Emulsion kontinuierlich der Polymerisationsreaktion zuführt.

2. Verfahren nach Anspruch 1, dadurch gekennzeichnet, daß man 0,01 bis 10 Gew.-% Ausgangspolymerisat, bezogen auf die zu polymerisierenden Monomere, verwendet.

3. Verfahren nach einem der vorhergehenden Ansprüche, dadurch gekennzeichnet, daß der mittlere Teilchendurchmesser (d₅₀-Wert) des Ausgangspolymerisats weniger als 250 nm beträgt.

4. Verfahren nach einem der vorhergehenden Ansprüche, dadurch gekennzeichnet, daß man als Ausgangspolymerisate wenigstens ein Copolymerisat verwendet, das
90 bis 99,9 Gew.-% vinylaromatische Monomere, konjugierte C₄-C₈-Diene, Ester der Acryl- oder der Methacrylsäure mit C₁-C₁₂-Alkanolen oder C₅-C₈-Cycloalkanolen oder Mischungen davon und
0,1 bis 10 Gew.-% α,β-ungesättigte C₃-C₁₀-Mono- oder Dicarbonsäuren, der Amide davon, N-Vinyllactame oder Mischungen davon einpolymerisiert enthält, wobei die Gewichtsanteile jeweils auf das Gesamtgewicht des Polymerisats bezogen sind.

5. Verfahren gemäß Anspruch 5, dadurch gekennzeichnet, daß man als Ausgangspolymerisat wenigstens ein Copolymerisat verwendet, das
90 bis 99,9 Gew.-% Styrol, α-Methylstyrol, Ester der Acrylsäure bzw. Methacrylsäure mit C₁-C₁₂-Alkanolen, Butadien oder Mischungen davon, und
0,1 bis 10 Gew.-% (Meth)acrylsäure, (Meth)acrylnitril, (Meth)acrylamid oder Mischungen davon einpolymerisiert enthält.

6. Verfahren nach einem der vorhergehenden Ansprüche, dadurch gekennzeichnet, daß man das Ausgangspolymerisat wenigstens 30 min in der Monomeremulsion quellen lässt, bevor man es zum Reaktionsansatz gibt.

7. Verfahren nach einem der vorhergehenden Ansprüche, dadurch gekennzeichnet, daß man als ethylenisch ungesättigte Monomere 80 bis 99,9 Gew.-% wenigstens eines Monomers, das ausgewählt ist unter Estern α,β-ungesättigter C₃-C₁₀-Mono- oder Dicarbonsäuren mit C₁-C₁₂-Alkanolen oder C₅-C₈-Cycloalkanolen, Vinylestern von C₂-C₁₈-Carbonsäuren, C₁-C₁₂-Alkylvinylethern, C₂-C₆-Olefinen, vinylaromatischen Monomeren, konjugierten C₄-C₈-Dienen, (Meth)acrylnitril oder Mischungen davon und 0,1 bis 20 Gew.-% α,β-monoethylenisch ungesättigte Mono- oder Dicarbonsäuren mit 3 bis 10 C-Atomen, deren Amide, Vinylsulfonsäure bzw. deren Salze, N-Vinylpyrrolidon oder Mischungen davon und
0 bis 10 Gew.-% vernetzende Monomere verwendet, wobei die Gewichtsteile jeweils auf die gesamte zu polymerisierende Monomermenge bezogen sind.

8. Verfahren nach einem der vorhergehenden Ansprüche, dadurch gekennzeichnet, daß in der Monomeremulsion das Mengenverhältnis Wasser:Monomer im Bereich von 1:1 bis 1:9 liegt.

9. Verfahren nach einem der vorhergehenden Ansprüche, dadurch gekennzeichnet, daß man die Monomeremulsion so zudosiert, daß die Umsatzrate der im Reaktionsansatz befindlichen Monomere wenigstens 80 % beträgt.

10. Wässrige Polymerisatdispersionen, erhältlich durch ein Verfahren gemäß einem der Ansprüche 1 bis 9.

11. Wässrige Polymerisatdispersionen nach Anspruch 10, deren Polymervolumengehalt > 65 Vol.-% beträgt.

12. Wässrige Polymerisatdispersionen nach Anspruch 10 oder 11, deren Viskosität < 1000 mPa.s beträgt.

13. Wässrige Polymerisatdispersionen nach einem der Ansprüche 10 bis 12, enthaltend Polymerisate, die
70 bis 100 Gew.-% Ester der Acryl- oder der Methacrylsäure mit C₁-C₁₂-Alkanolen, Styrol oder deren Mischungen,
oder
70 bis 100 Gew.-% Styrol, Butadien oder deren Mischungen einpolymerisiert enthalten.

14. Wässrige Polymerisatdispersionen nach einem der Ansprüche 10 bis 13, enthaltend Polymerisate, die
95 bis 99,7 Gew.-% wenigstens einen Ester der Acrylsäure und/oder der Methacrylsäure mit C₁-C₁₂-Alkanolen,
0,3 bis 5 Gew.-% Acrylsäure und/oder Methacrylsäure und 0 bis 1 Gew.-% Acrylamid und/oder Methacrylamid einpolymerisiert enthalten.

15. Verwendung der wässrigen Polymerisatdispersionen aus einem der Ansprüche 10 bis 14 als Bindemittel für Beschichtungsmassen, Klebemittel und zur Ausrüstung von Papier, Leder, Geweben oder Vliesstoffen.
